Europäisches Patentamt

European Patent Office

Office européen des brevets

(19)

(11) Veröffentlichungsnummer : **0 085 886**
**B1**

(12) **EUROPÄISCHE PATENTSCHRIFT**

(45) Veröffentlichungstag der Patentschrift :
**15.05.85**

(51) Int. Cl.⁴ : **B 65 G 47/26**

(21) Anmeldenummer : **83100620.0**

(22) Anmeldetag : **25.01.83**

(54) **Reversierbare Stauförderbahn.**

(30) Priorität : **26.01.82 DE 3202382**

(43) Veröffentlichungstag der Anmeldung :
**17.08.83 Patentblatt 83/33**

(45) Bekanntmachung des Hinweises auf die Patenterteilung : **15.05.85 Patentblatt 85/20**

(84) Benannte Vertragsstaaten :
**AT BE CH DE FR GB IT LI NL SE**

(56) Entgegenhaltungen :
**DE-A- 2 035 810**
**DE-A- 2 052 418**
**DE-A- 2 650 205**
**US-A- 3 122 232**

(73) Patentinhaber : **Gebhardt Fördertechnik GmbH**
**Postfach 304**
**D-6920 Sinsheim (DE)**

(72) Erfinder : **Felder, Hans Christian, Dipl.-Ing.**
**Forsthausstrasse 12**
**D-6022 Dreieichenhain (DE)**

(74) Vertreter : **Neugebauer, Bernhard**
**Tölzer Strasse 7**
**D-7100 Heilbronn (DE)**

EP 0 085 886 B1

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

**Beschreibung**

Die Erfindung betrifft eine reversierbare Stauförderbahn zum Transportieren von Stückgut mit einem zwischen Längsrahmen angeordneten Transportmittel, das sektionsweise aufgeteilt ist und von dem jede Sektion durch mindestens eine von einem umlaufenden Zugmittel angetriebene Zwischenrolle angetrieben wird, wobei die Zwischenrolle jeder Sektion durch ein Steuergestänge mit einem vom Stückgut betätigbaren Fühler verbunden und aus einer Antriebs- in eine Leerlaufstellung stellbar ist.

Aus der DE-A-2 052 418 ist bereits eine Stauförderbahn in Form einer Staurollenbahn bekannt, bei der das Stückgut tragende, drehbare Tragrollen durch eine verstellbare Zwischenrolle mit einem ständig umlaufenden Zugmittel antriebsmäßig verbindbar sind. Die Zwischenrollen sind sektionsweise aufgeteilt, wobei jede Rollengruppe durch einen vom Stückgut gesteuerten Fühler aus der Antriebsstellung in eine Leerlaufstellung gestellt wird. Bei Freigabe des Fühlers gelangen die Zwischenrollen wieder in die Antriebsstellung. Das Rückstellen erfolgt mit Hilfe des umlaufenden Zugmittels, hilfsweise kann auch eine Feder vorgesehen sein. Die volle Antriebskraft kann somit nur in einer Transportrichtung vom Zugmittel auf die Tragrollen übertragen werden. In der anderen Transportrichtung könnte nur die Feder eine mäßige Andrückkraft der Zwischenrollen am Zugmittel und den Tragrollen hervorrufen. Eine nennenswerte Kraftübertragung und somit Transportleistung läßt sich damit aber nicht erreichen. Die bekannte Staurollenbahn kann daher nur in einer Transportrichtung eingesetzt werden.

Aufgabe der Erfindung ist es daher, eine Stauförderbahn so zu verbessern, daß sie mit gleichem Transport- und Staueffekt in beiden Transportrichtungen eingesetzt werden kann.

Diese Aufgabe wird durch die Erfindung dadurch gelöst, daß jede Sektion des Transportmittels mindestens zwei in entgegengesetzten Transportrichtungen auf das Transportmittel wirkende Zwischenrollen aufweist, von denen immer nur eine Zwischenrolle die Antriebsstellung einnimmt.

Die mit der Erfindung erreichbaren Vorteile bestehen insbesondere darin, daß eine derartig ausgestattete Stauförderbahn in beiden Transportrichtungen mit der gleichen Förderleistung und dem gleichen Staueffekt arbeitet. Eine solche Stauförderbahn kann somit in beiden Richtungen mit der gleichen Geschwindigkeit be- und entladen werden. Sie läßt sich daher als beidseitig beaufschlagbarer Speicher verwenden, wodurch die Einsatzmöglichkeiten erheblich gesteigert worden sind. Dagegen ist die Ausführung und die Funktionsweise einfach. Die reversierbare Stauförderbahn nach der Erfindung erhöht somit den Einsatzbereich eines solchen Speichers beträchtlich.

Weitere Merkmale der Erfindung sind in den Unteransprüchen beschrieben.

Ausführungsbeispiele der Erfindung sind in der Zeichnung dargestellt und werden im folgenden näher erläutert. Es zeigen :

Figur 1 die Draufsicht auf die reversierbare Stauförderbahn ;

Figur 2 die Schnittansicht gem. Linie II-II in Fig. 1 ;

Figur 3 die Draufsicht auf die Ansicht gem. Fig. 2 ;

Figur 4 die Schnittansicht gem. Linie IV-IV in Fig. 1 ;

Figur 5 die Draufsicht auf die Ansicht gem. Fig. 4 ;

Figur 6 die vergrößerte Schnittansicht gem. Linie VI-VI in Fig. 2 ;

Figur 7 die vergrößerte Schnittansicht gem. Linie VII-VII in Fig. 4 ;

Figur 8 die Draufsicht auf eine Stellvorrichtung ;

Figur 9 die Draufsicht auf eine andere Ausführung der Stellvorrichtung ;

Figur 10 die Ansicht einer anderen Ausführung der Stauförderbahn ;

Figur 11 die Draufsicht auf die Ansicht gem. Fig. 10.

Figur 12 die Ansicht einer weiteren Anwendungsform ;

Figur 13 die Draufsicht auf die Ausführung gem. Fig. 12.

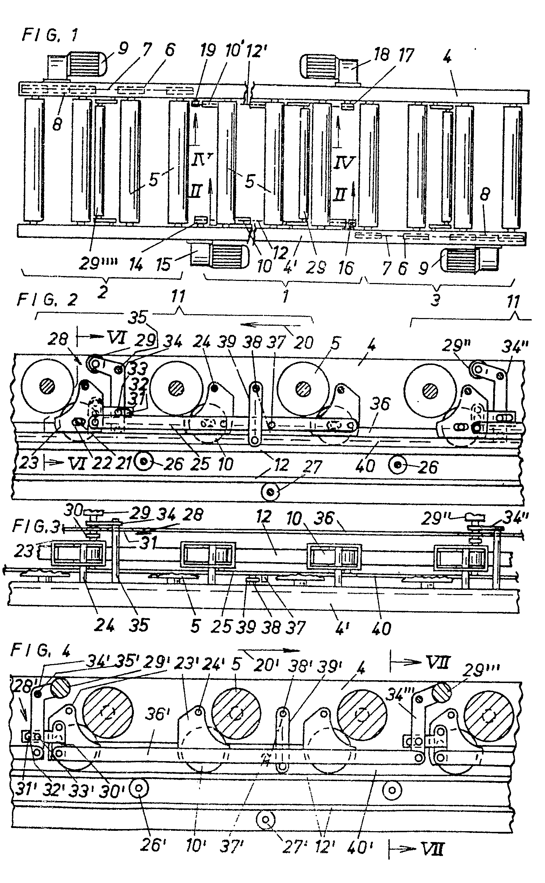

Als Ausführungsbeispiel einer reversierbaren Stauförderbahn zum Speichern und wahlweisen Einspeichern und Ausgeben von Stückgut in der einen oder anderen Transportrichtung ist in Fig. 1 eine Förderbahn dargestellt. Diese besteht aus einer Staurollenbahn 1, an deren Enden je eine Endrollenbahn 2 und 3 angeschlossen ist. Die gesamte Förderbahn weist parallele Längsprofile bzw. Längsrahmen 4 und 4' auf, zwischen denen quer zur Transportrichtung als Transportmittel Tragrollen 5 drehbar gelagert sind. Die Tragrollen 5 der Endrollenbahnen 2 und 3 sind mit Antriebsrädern fest verbunden, über die ein Riemen 7 o. dgl. gelegt ist. Dieser umschlingt auch ein Abtriebsrad 8 eines Motors 9, so daß mit Einschalten dieses wahlweise in der einen oder anderen Drehrichtung treibbaren Motors 9 auch alle Tragrollen 5 der Endrollenbahnen 2 und 3 in der einen oder anderen Richtung drehen.

Jeder Tragrolle 5 der Staurollenbahn 1 sind jeweils zwei radial an den beiden Seiten angeordnete Zwischenrollen 10 und 10' zugeordnet, die auf je einem umlaufenden Zugmittel 12 und 12', wie z. B. Riemen, Kette o. dgl., abrollen. Das Zugmittel 12 wird an einem Ende der Staurollenbahn 1 durch das Antriebsrad 14 eines Getriebemotors 15 und am anderen Ende durch ein am Längsprofil 4' gelagertes Umlenkrad 16 umgelenkt. Entsprechend ist das Zugmittel 12' über an Antriebsrad 17 eines Getriebemotors 18 und ein Umlenkrad 19 gelegt. Letzterem quer gegenüber ist der Getriebemotor 15 und dem Umlenkrad 16 quer gegenüber der Getriebemotor 18 gelagert. Beide Getriebemotoren 15 und 18 können zum Antrieb in der einen oder anderen Drehrichtung geschaltet werden.

In den Fig. 2, 3 und 7 ist die Anordnung der Zwischenrollen 10 dargestellt. Diese sind an einem Stirnende der Tragrolle 5 anordnet und werden bei Umlauf des Zugmittels 12 im Gegenuhrzeigersinn gegen die Tragrolle 5 gedrückt, so daß diese ebenfalls im Gegenuhrzeigersinn gedreht werden. Ein auf den Tragrollen 5 befindliches Stückgut wird dann in Richtung des Pfeiles 20 von rechts nach links transportiert. Die Zwischenrolle 10 ist mit einer Achse 21 in einem etwa waagerechten Langloch 22 eines Gehäuses 23 mit radialem Spiel gelagert. Das Gehäuse 23 kann um einen oberhalb des Langloches 22 angeordneten und am Längsprofil 4' befestigten Bolzen 24 schwenken. Die Tragrollen 5 und damit auch die Zwischenrollen 10 sind zu mehreren in Sektionen 11 zusammengefaßt. Die Länge der Sektionen 11 hängt vom zu transportierenden und zu stauenden Stückgut ab und umfaßt eine entsprechende Anzahl von Tragrollen 5 und Zwischenrollen 10 und auch 10'. Die Gehäuse 23 jeder Sektion 11 sind gemeinsam an einer Verbindungsschiene 25 angelenkt und so miteinander verbunden. Unterhalb der Zwischenrollen 10 ist das Zugmittel 12 durch Stützrollen 26 abgestützt, während das rücklaufende Trum über Röllchen 27 geführt ist.

Jede Sektion 11 von Zwischenrollen 10 ist durch ein Steuergestänge 28 mit einem z. B. als Steuerrolle ausgebildeten Fühler 29 verbunden, der normalerweise in die Bahn des Stückgutes ragt und durch dieses beim Überrollen nach unten gedrückt wird. Dadurch wird die angeschlossene Sektion 11 von Zwischenrollen 10 in eine Leerlaufstellung, in Fig. 2 nach rechts, gedrückt und so durch Abheben von der Tragrolle 5 der Antrieb unbrochen. Das Steuergestänge 28 besteht aus einem etwa mittig an einem der Gehäuse 23 der Sektion 11 angelenkten Zwischenhebel 30, an dessen oberen Ende ein Winkelhebel 31 drehbar an einem Bolzen gelagert ist. Am etwa waagerecht entgegengesetzt zum Gehäuse 23 gerichteten Hebelarm des Winkelhebels 31 ist ein Langloch 32 vorgesehen, in das ein Stift 33 eines den Fühler 29 tragenden und oben in Transportrichtung abgewinkelten Fühlerhebels 34 ragt. Letzterer ist um eine Achse 35 an den Längsprofilen 4 und 4' schwenkbar gelagert. Am unteren Ende des Zwischenhebels 30 ist eine Stange 36 angelenkt, die in Richtung der Transportrichtung gem. Pfeil 20 bis zum Fühler 29 der davor liegenden Sektion 11 geführt und dort am unteren Ende des Fühlerhebels 34 angelenkt ist. An der Verbindungsschiene 25 ist ein Bolzen 37 befestigt, an den sich ein um eine Achse 38 am Längsprofil 4' schwenkbarer Stellhebel 39 anlegt, wenn er im Gegenuhrzeigersinn verschwenkt wird, wie strichpunktiert angedeutet ist. Mit seinem unteren Ende ist der Stellhebel 39 an einer Stellschiene 40 angelenkt, die sich über mehrere Sektionen 11, vorzugsweise über die ganze Länge der Staurollenbahn 1 erstreckt.

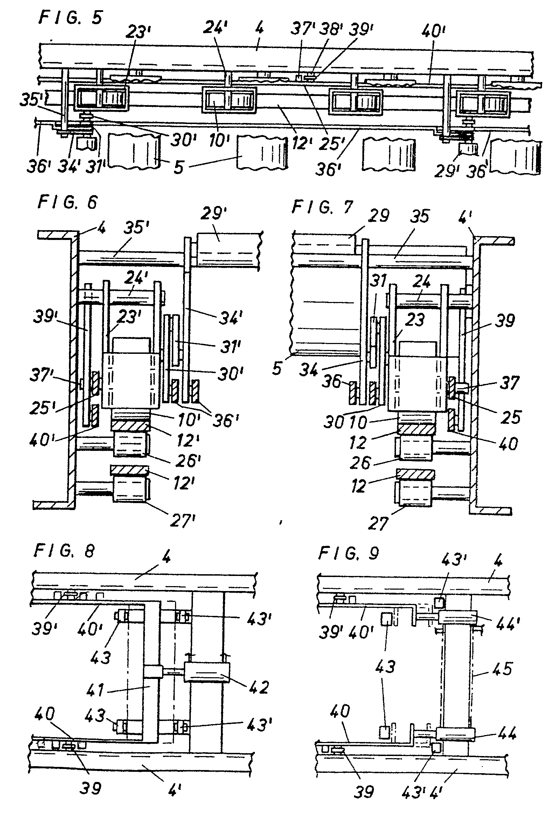

An den Tragrollen 5 sind radial auf der anderen Seite und am anderen Stirnende je eine weitere Zwischenrolle 10' mit einem Steuergestänge 28' angeordnet, das mit einem Fühler 29' verbunden ist. Die Anordnung, Ausbildung und Funktion entsprechen der eben beschriebenen und sind in den Fig. 4, 5 und 6 dargestellt. Es sind daher die gleichen Bezugszeichen für die gleichen Teile verwendet worden, die sich lediglich durch einen Bezugsstrich unterscheiden. Zum Transport in Richtung des Pfeiles 20', also entgegengesetzt zur Richtung des Pfeiles 20, läuft das Zugmittel 12' im Uhrzeigersinn um. Entsprechend wird der Stellhebel 39' zum Ausschalten aller Zwischenrollen 10' im Uhrzeigersinn geschwenkt, wie in Fig. 4 strichpunktiert angedeutet ist.

Die beiden Stellschienen 40 und 40' sind z. B. an den beiden Enden durch einen Quersteg 41 miteinander verbunden, der durch einen Stellmotor 42, z. B. einen pneumatischen Stellzylinder, in eine der beiden strichpunktiert angedeuteten Endstellungen stellbar ist, wie in Fig. 8 gezeigt ist. Die Endstellungen sind durch vorzugsweise einstellbare Anschläge 43 und 43' festgelegt. In der linken Endstellung mit Anlage an den Anschlägen 43 werden dabei die Bolzen 37' und damit die Verbindungsschienen 25' und in der Endstellung mit Anlage an den Anschlägen 43' die Bolzen 37 mit den Verbindungsschienen 25 in die jeweilige Leerlaufstellung verstellt. Anstelle des Quersteges 41 kann auch jede Stellschiene 40 und 40' einen eigenen Stellmotor 44 bzw. 44' besitzen, die dann vorzugsweise durch eine Leitung 45 so miteinander gekoppelt sind, daß sie immer gleichsinnig arbeiten, also entweder die beiden Stellschienen 40 und 40' an den Anschlägen 43 oder den Anschlägen 43' anliegen (Fig. 9).

Es ist ersichtlich, daß wahlweise über die Endrollenbahn 2 oder die Endrollenbahn 3 ein Stückgut auf die Staurollenbahn 1 gefördert werden kann. Wird z. B. ein Stückgut über die Endrollenbahn 2 eingefördert, dann wird durch deren Fühler 29'''' ein Signal an den Stellmotor 42 bzw. 44, 44' gegeben, so daß dieser die Stellschienen 40 und 40' in die rechte Endstellung mit Anlage an den Anschlägen 43' stellt. In dieser Endstellung sind alle Zwischenrollen 10 in ihre Leerlaufstellung gestellt, so daß nur die Zwischenrollen 10' die Tragrollen 5 antreiben können. Dabei können beide Zugmittel 12 und 12' ständig in entgegengesetzten Richtungen umlaufen, also das Zugmittel 12 im Gegenuhrzeigersinn und das Zugmittel 12' im Uhrzeigersinn. Natürlich kann auch das nur benötigte Zugmittel, im Beispiel das Zugmittel 12', eingeschaltet werden. Solange kein Stückgut gespeichert ist, wird das einzuspeichernde Stückgut konstant weiterbefördert. Steht dagegen bereits ein Stückgut auf der Staurollenbahn 1, dann ist ein Fühler, z. B. der Fühler 29''' (Fig. 4) niedergedrückt, also der Fühlerhebel 34''' im Uhrzeigersinn geschwenkt. Dadurch ist über die Stange 36' der Zwischenhebel 30' der dahinter liegenden Sektion im Uhrzeigersinn gedreht worden, so daß der Winkelhebel 31' nach rechts verschoben ist, wobei das Langloch 32' in die andere Endstellung gelangt. Der Stift 33' des Fühlerhebels 34' liegt so am linken Ende des Langloches 32'. Wird nunmehr der Fühler 29' durch das ankommende Stückgut ebenfalls niedergedrückt, dann wird durch Schwenken des Fühlerhebels 34' im Uhrzeigersinn das Gehäuse 23' und mit diesem alle Gehäuse 23' der Sektion im Uhrzeigersinn geschwenkt. Damit werden die darin gelagerten Zwischenrollen 10' von der Tragrolle 5 entfernt. Diese und somit auch das Stückgut bleiben stehen.

Soll nun in der Gegenrichtung, also von rechts nach links gem. Pfeil 20 in Fig. 2 gefördert werden, dann werden beide Stellschienen 40 und 40' nach links in die Endstellung am Anschlag 43 geschoben. Die Zwischenrollen 10' sind dann von den Tragrollen 5 abgehoben und die Zwischenrollen 10 liegen an bzw. bleiben in der Freilaufstellung, wenn durch Stückgüter Fühler 29 niedergedrückt sind. Das Transportieren und Stauen vollzieht sich in oben beschriebener Weise. Natürlich kann das Rückstellen der Zwischenrollen 10 und 10' bzw. auch der Fühler 29 und 29' durch Federn unterstützt werden.

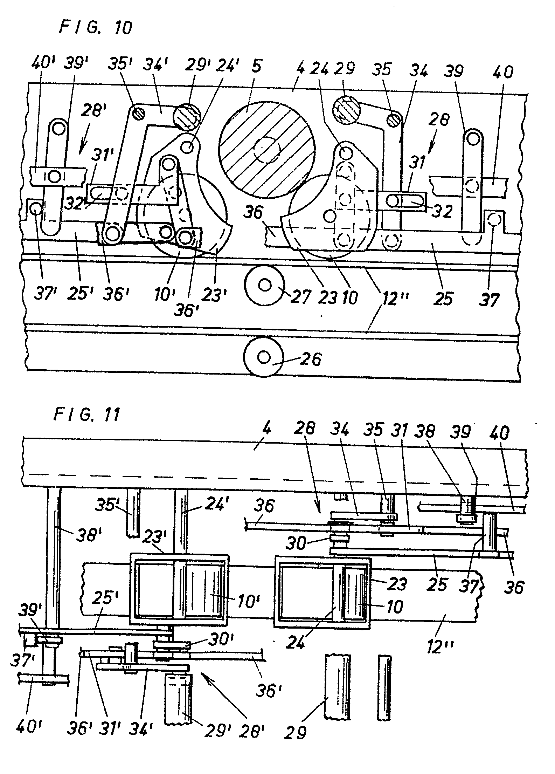

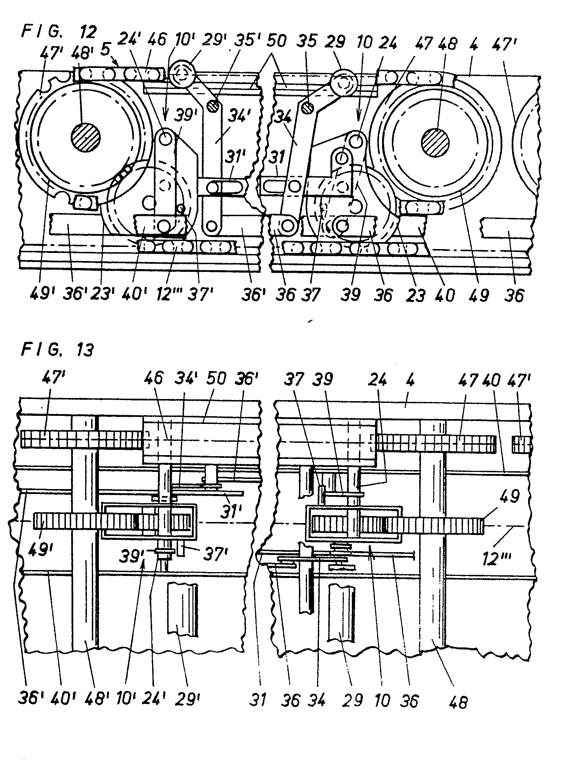

In weiterer Ausgestaltung gem. den Fig. 10 und 11 sind die beiden Zwischenrollen 10 und 10' radial gegenüberliegend an der Tragrolle 5 angeordnet, wobei sie beide auf dem gleichen Zugmittel 12″ ablaufen. Auch hier entspricht die Anordnung und der Aufbau der oben beschriebenen, so daß gleiche Teile mit gleichen Bezugszahlen versehen worden sind. Die den Zwischenrollen 10 und 10' zugeordneten Steuergestänge 28 und 28′ sind jeweils komplett an einer Seite der Gehäuse 23 und 23' angeordnet. Lediglich die Umlaufrichtung des Zugmittels 12″ muß bei Änderung der Transportrichtung gleichfalls umgekehrt werden. In Fig. 10 ist die Zwischenrolle 10 in Antriebs- und die Zwischenrolle 10' in Leerlaufstellung dargestellt. Die Transportrichtung zeigt hierbei von rechts nach links, d. h. das Zugmittel 12″ läuft im Gegenuhrzeigersinn um. Bei Umstellung auf die andere Transportrichtung werden die Stellschienen 40 und 40' nach rechts verschoben, so daß die Zwischenrollen 10' freigegeben und die Zwischenrollen 10 von der Tragrolle 5 abgehoben werden. Geichzeitig wird die Umlaufrichtung des Zugmittels 12″ umgekehrt.

In bestimmten Fällen, z. B. bei langsam laufenden Förderbahnen, kann auch auf die zwangsweise Umschaltung der Zwischenrollen 10 und 10' durch die Stellschienen 40 und 40' verzichtet werden, wenn dafür gesorgt wird, daß die nicht treibenden Zwischenrollen 10 oder 10' durch das entgegen der Transportrichtung laufende Zugmittel 12 oder 12' daran gehindert werden, sich zwischen Tragrolle 5 und Zugmittel 12 oder 12' einzuklemmen.

Sind gem. dem Ausführungsbeispiel der Fig. 1 bis 7 zwei Zugmittel 12 und 12' vorhanden, dann müssen beide Zugmittel 12, 12' immer gleichsinnig umlaufen und bei jedem Richtungswechsel im Transport auch in ihrer Umlaufrichtung umgekehrt werden. Ist gem. dem Ausführungsbeispiel der Fig. 10 und 11 nur ein einziges Zugmittel 12″ vorhanden, dann wird der gleiche Effekt durch das an sich erforderliche Umschalten der Umlaufrichtung erreicht.

Selbstverständlich ist die Erfindung nicht auf eine Staurollenbahn beschränkt. Sie läßt sich in gleicher Weise bei jeder Stauförderbahn mit anderem Transportmittel anwenden, z. B. bei Band- oder Kettenförderern. Ein Ausführungsbeispiel für die Anwendung bei einem Kettenförderer ist in den Fig. 12 und 13 dargestellt. Gleiche Teile sind auch hier wieder mit gleichen Bezugszeichen versehen worden. Das gemeinsame Zugmittel 12‴ für die Zwischenrollen 10, 10' ist als ständig umlaufende Kette ausgebildet. Als Transportmittel für das Stückgut dient in jeder Sektion der Stauförderbahn ebenfalls eine Kette 46, die oben auf einem Stützprofil 50 entlangläuft und an den Sektionsenden durch Umlenkräder 47 und 47' umgelenkt ist. Selbstverständlich sind mindestens zwei Ketten 46 parallel nebeneinander angeordnet, die über die auf je einer gemeinsamen Welle 48 und 48' sitzenden Umlenkräder 47 und 47' geführt sind. Auf jeder Welle 48, 48' ist ferner noch ein Zahnrad 49, 49' befestigt, in das die gleichfalls als Zahnrad ausgebildete Zwischenrolle 10, 10' in der Antriebsstellung eingreift. Die Zwischenrollen 10 und 10' sind in den um die Bolzen 24 und 24' schwenkbaren Gehäuse 23 und 23' drehbar gelagert. Das Verstellen der Zwischenrollen 10 und 10' erfolgt in beschriebener Weise durch die zugeordneten Fühler 29 und 29'. Von diesen ist in jeder Sektion jeweils ein Fühler 29 dicht vor dem Umlenkrad 47 für die Transportrichtung von links nach rechts und ein Fühler 29' vor dem Umlenkrad 47' für die Transportrichtung von rechts nach links angeordnet. Dementsprechend ist für jede Transportrichtung jeweils eine Zwischenrolle 10 bzw. 10' vorgesehen. Das Ausschalten der jeweils nicht benötigten Zwischenrolle 10 oder 10' erfolgt durch die z. B. am Bolzen 24 bzw. 24' der Gehäuse 23 und 23' schwenkbar gelagerten Stellhebel 39 und 39', die an jeweils einer hilfskraftbetätigten Stellschiene 40 und 40' angelenkt sind und beim Verschwenken an am Gehäuse 23 und 23' angebrachte Bolzen 37 und 37' anschlagen. Es ist ersichtlich, daß die Zwischenrollen 10 in dargestellter Weise durch Verschwenken der Stellhebel 39 durch Anschlagen an die Bolzen 37 im Uhrzeigersinn in die Freilaufstellung gestellt und dort gehalten werden. Gleiches geschieht mit den Zwischenrollen 10' durch Verschwenken der der Stellhebel 39' im Gegenuhrzeigersinn, wobei durch Anschlagen an die Bolzen 37' die Zwischenrollen 10' im Gegenuhrzeigersinn ausgeschwenkt werden. Das Verstellen der Stellhebel 39 und 39' bzw. deren Stellschienen 40 und 40' erfolgt in bereits beschriebener Weise, wobei auch die Laufrichtung des Zugmittels 12‴ umgestellt wird. Natürlich kann auch jeder Zwischenrolle 10 und 10' ein eigenes Zugmittel 12''' zugeordnet sein.

## Patentansprüche

1. Reversierbare Stauförderbahn zum Transportieren und Stauen von Stückgut mit einem zwischen Längsrahmen (4, 4') angeordneten Transportmittel (5), das sektionsweise aufgeteilt ist und von dem jede Sektion (11) durch mindestens eine von einem umlaufenden Zugmittel (12) angetriebene Zwischenrolle (10) angetrieben wird, wobei die Zwischenrolle (10) jeder Sektion durch ein Steuergestänge mit einem vom Stückgut betätigbaren Fühler (29) verbunden und aus einer Antriebs- in eine Leerlaufstellung stellbar ist, dadurch gekennzeichnet, daß jede Sektion (11) des Transportmittels (5) mindestens zwei in entgegengesetzten Transportrichtungen auf das Transportmittel (5) wirkende Zwischenrollen (10, 10') aufweist, von denen immer nur eine Zwischenrolle (10 oder 10') die Antriebsstellung einnimmt.

2. Stauförderbahn nach Anspruch 1, dadurch gekennzeichnet, daß das Zugmittel (12, 12', 12") der nicht in Antriebsstellung befindlichen Zwischenrolle (10, 10') entgegengesetzt zur Transportrichtung angetrieben ist.

3. Stauförderbahn nach Anspruch 1 oder 2, dadurch gekennzeichnet, daß die nicht in der Antriebsstellung benötigte Zwischenrolle (10, 10') durch hilfskraftbetätigte Stellschienen (40, 40') in die Leerlaufstellung gestellt ist und dort gehalten wird.

4. Stauförderbahn nach einem der Ansprüche 1 bis 3, dadurch gekennzeichnet, daß die beiden Zwischenrollen (10, 10') seitlich versetzt zueinander am Transportmittel (5) angeordnet sind und durch je ein umlaufendes Zugmittel (12, 12') angetrieben sind.

5. Stauförderbahn nach den Ansprüchen 1, 2 und 4, dadurch gekennzeichnet, daß die beiden Zugmittel (12, 12') jeweils in der gleichen Richtung umlaufen.

6. Stauförderbahn nach einem der Ansprüche 1 bis 3, dadurch gekennzeichnet, daß die Zwischenrollen (10, 10') gegenüberliegend am Transportmittel (5) angeordnet sind und gemeinsam auf einem in der einen oder der anderen Richtung antreibbaren Zugmittel (12") abrollen.

7. Stauförderbahn nach mindestens einem der Ansprüche 1 bis 6, dadurch gekennzeichnet, daß die jeweilige Transportrichtung durch einen vorgeschalteten Fühler (29'''') vorgewählt wird.

8. Stauförderbahn mit als Band oder Kette ausgebildetem, sektionsweise umlaufendem Transportmittel nach mindestens einem der Ansprüche 1 bis 7, dadurch gekennzeichnet, daß jeweils eine Zwischenrolle (10, 10') und der zugeordnete Fühler (29, 29') in der jeweiligen Transportrichtung gesehen vor der ausgangsseitigen Welle (48, 48') der Umlenkräder (47, 47') für das Transportmittel (5) angeordnet und die Zwischenrollen (10, 10') mit einem mit dem Umlenkrad (47, 47') verbundenen Zahnrad (49, 49') in der Antriebsstellung in Eingriff sind.

## Claims

1. A reversible accumulating conveyer track for transporting and accumulating piece goods featuring a transportation means (5) arranged between longitudinal frames (4 ; 4') and divided into sections with each section being driven by a minimum of one intermediate roller (10) which in turn is driven by a rotating conveying means while the intermediate roller (10) of each section is connected *via* a control linkage to a sensing element (29) operated by the piece goods to move into its driving or idling position, identified by the feature that each section (11) of the transportation means (5) has at least two intermediate rollers (10 ; 10') acting on the transportation means (5) in opposite transportation directions with either the intermediate roller (10) or (10') being in driving position at a time.

2. An accumulating conveyer track according to Claim 1, identified by the feature that the conveying means (12 ; 12' ; 12") of the idling intermediate roller (10) or (10') is driven in the direction opposite to the direction of transportation.

3. An accumulating conveyer track according to Claims 1 or 2, identified by the feature that the intermediate roller (10 ; 10') not required to be in the driving position is moved into its idling position and held there by auxiliary-force operated slide rails (40 ; 40').

4. An accumulating conveyer track according to Claims 1 through 3, identified by the feature that the two intermediate rollers (10 ; 10') are arranged on the transportation means (5) laterally offset relative to each other and driven *via* one each rotating conveying means (12 ; 12').

5. An accumulating conveyer track according to Claims 1, 2, 4, identified by the feature that both conveying means (12 ; 12') rotate in the same direction.

6. An accumulating conveyer track according to one of the Claims 1 through 3, identified by the feature that the intermediate rollers (10 ; 10') are oppositely arranged on the transportation means (5) and jointly ride on a conveying means (12") which may be driven in either direction.

7. An accumulating conveyer track according to at least one of the Claims 1 through 6, identified by the feature that the direction of transportation is preselected *via* a lined up sensing element (29'''').

8. An accumulating conveyer track with a belt or chain type sectionized rotating transportation means according to at least one of the Claims 1 through 7, identified by the feature that one of the intermediate rollers (10 ; 10') and its pertinent sensing element (29 ; 29') viewing in the respective direction of transportation are arranged ahead of the delivery-side shaft (48 ; 48') of the return wheels (47 ; 47') for the transportation means (5) while the intermediate rollers (10 ; 10') are in mesh with a gear wheel (49 ; 49') that is connected to the return wheel (47 ; 47') while in driving position.

## Revendications

1. Bande transporteuse réversible pour transporter et grouper des colis au moyen d'un système de transport (5) se trouvant disposé dans des cadres longitudinaux (4, 4'), réparti en sections et commandé par section (11) au moins par un rouleau intermédiaire (10) qui, à son tour, est entraîné par un système circulant de traction. Le rouleau intermédiaire (10) de chaque section est relié par des tringles de commande et doté d'un tâteur actionné par les colis et permettant un réglage de la position de marche en position à vide. Il est caractérisé par le fait que chaque section (11) du système de transport (5) est équipé au minimum de deux rouleaux intermédiaires (10, 10') influant dans des sens inverses sur le système de transport (5) dont uniquement un rouleau intermédiaire (10 ou 10') se trouve en position d'entraînement.

2. La bande transporteuse à grouper les colis selon la revendication 1 est caractérisée par le fait que le système de traction (12, 12', 12'') du rouleau intermédiaire ne se trouvant pas en position d'entraînement est commandé en sens inverse par rapport à la direction de transport.

3. La bande transporteuse à grouper les colis selon les revendications 1 ou 2 est caractérisée par le fait que le rouleau intermédiaire (10, 10') qui ne doit pas être réglé en position d'entraînement se trouve mis en position à vide où il est retenu, ce qui est assuré par des rails de réglage (40, 40') actionnés par un dispositif auxiliaire.

4. La bande transporteuse à grouper les colis selon une des revendications 1 à 3 est caractérisée par le fait que les deux rouleaux intermédiaires (10, 10') sont disposés sur le système de transport en déport latéral l'un vers l'autre et que chacun des rouleaux est entraîné par un système circulant de traction (12, 12').

5. La bande transporteuse à grouper les colis selon les revendications 1, 2 et 4 est caractérisée par le fait que les deux systèmes de traction (12, 12') circulent dans le même sens.

6. La bande transporteuse à grouper les colis selon les revendications 1 à 3 est caractérisée par le fait que les rouleaux intermédiaires (10, 10') se trouvent disposés en position opposée au système de transport (5) et qu'ils se déroulent en commun sur le système de traction (12'') qui est entraîné dans l'un ou l'autre sens.

7. La bande transporteuse à grouper les colis selon au moins une des revendications 1 à 6 est caractérisée par le fait que la direction choisie de transport est présélectionnée par un tâteur inséré (29'''').

8. La bande transporteuse à grouper les colis et le système de transport circulant par section et conçu comme courroie ou chaîne est caractérisée selon au moins une des revendications 1 à 7 que chaque fois un rouleau intermédiaire (10, 10') et le tâteur y appartenant (29, 29') se trouvent disposés devant l'arbre (48, 48') du côté de sortie des roues de renvoi (47, 47') pour le système de transport (5), vu en direction de transport, et que les rouleaux intermédiaires (10, 10') sont engrenés en position d'entraînement avec la roue dentée (49, 49') reliée avec la roue de renvoi (47, 47').

FIG. 1

FIG. 2

FIG. 3

FIG. 4

FIG. 5

FIG. 6

FIG. 7

FIG. 8

FIG. 9

F I G. 10

F I G. 11

0 085 886

FIG. 12

47' 48' 5  24' 46 10' 29' 35' 50  35 29 10 24  47 48 4  47'

49' 36' 23' 40' 12'''' 37'  36'  36 37  39 36 23 40 49 36

FIG. 13

47'  46 34' 50 36'  37 39  24 4  47 40 47'

49'  39'  37'  31'  49  12'''

36' 40' 48' 10' 24' 29'  31 36 34 29 10 36  48

4